# EUROPÄISCHE PATENTANMELDUNG

(11) **EP 1 974 916 A2**
(43) Veröffentlichungstag der Anmeldung: **01.10.2008**
(21) Anmeldenummer: 08005102.2
(22) Anmeldetag: 19.03.2008
(51) Int. Cl.: B41F 13/004, B41F 13/08

(54) **Angetriebene Baugruppe einer Druckmaschine**

(30) Priorität: 24.03.2007 DE 102007014228
(71) Anmelder: manroland AG, 63075 Offenbach (DE)
(72) Erfinder: Beer, Ewald, 86179 Augsburg (DE); Schäfer, Lilia, 86368 Gersthofen (DE)
(74) Vertreter: Ulrich, Thomas

(57) **Zusammenfassung**

Die Erfindung betrifft eine angetriebene Baugruppe einer Druckmaschine, nämlich eine einem Bedruckstofftransport dienende Walze (10) oder einen einem Bedruckstofftransport dienender Zylinder, mit einem als Elektromotor (11) ausgebildeten Antrieb zum rotierenden Antreiben rotorseitiger Elemente der Baugruppe. Erfindungsgemäß ist der Elektromotor (11) in die angetriebene Baugruppe integriert, wobei der Elektromotor (11) als Innenläufermotor ausgebildet ist.

## Beschreibung

Die Erfindung betrifft eine angetriebene Baugruppe einer Druckmaschine nach dem Oberbegriff des Anspruchs 1.

Druckmaschinen verfügen über eine Vielzahl von rotierenden Walzen sowie rotierenden Zylindern, die dem Transport eines zu bedruckenden Bedruckstoffs durch die Druckmaschine dienen. Zum Antreiben der Walzen bzw. Zylinder sind denselben als Elektromotoren ausgebildete Antriebe zugeordnet, wobei bei aus der Praxis bekannten Druckmaschinen die Antriebe der angetriebenen Walzen bzw. Zylinder außerhalb der jeweiligen anzutreibenden Baugruppe positioniert sind.

Hiervon ausgehend liegt der vorliegenden Erfindung die Aufgabe zugrunde, eine neuartige angetriebene Baugruppe einer Druckmaschine zu schaffen. Diese Aufgabe wird durch eine angetriebene Baugruppe einer Druckmaschine gemäß Anspruch 1 gelöst. Erfindungsgemäß ist der Elektromotor in die angetriebene Baugruppe integriert, wobei der Elektromotor als Innenläufermotor ausgebildet ist.

Erfindungsgemäß ist der Antrieb einer angetriebenen Baugruppe als Innenläufermotor ausgebildet, der in die angetriebene Baugruppe integriert ist. Hierdurch kann eine kompakte Bauform für die angetriebene Baugruppe realisiert werden. Der an der Druckmaschine frei werdende Bauraum kann entweder zur Platzierung anderer Baugruppen oder zur Realisierung einer Druckmaschine mit geringeren Abmessungen, insbesondere mit schmäleren Galerien, genutzt werden. Weiterhin reduziert sich durch die Integration des Innenläufermotors in die angetriebene Baugruppe der Druckmaschine der Montageaufwand.

Vorzugsweise weist die angetriebene Baugruppe einen rotorseitigen Grundkörper, nämlich einen Walzenmantel oder einen Zylindermantel auf, wobei der Innenläufermotor derart in einen vom Grundkörper definierten Hohlraum integriert ist, dass der Innenläufermotor innerhalb oder außerhalb eines beim Bedruckstofftransport überdeckten Abschnitts des Grundkörpers liegt.

Nach einer vorteilhaften Weiterbildung der Erfindung weist die angetriebene Baugruppe mindestens eine in dieselbe integrierte Belüftungseinrichtung zur Belüftung des Innenläufermotors und damit zur Abführung der von dem Innenläufermotor erzeugten Wärme auf.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein erstes Ausführungsbeispiel einer erfindungsgemäßen, angetriebenen Baugruppe einer Druckmaschine;
- Fig. 2:: ein zweites Ausführungsbeispiel einer erfindungsgemäßen, angetriebenen Baugruppe einer Druckmaschine;
- Fig. 3:: ein drittes Ausführungsbeispiel einer erfindungsgemäßen, angetriebenen Baugruppe einer Druckmaschine;
- Fig. 4:: ein viertes Ausführungsbeispiel einer erfindungsgemäßen, angetriebenen Baugruppe einer Druckmaschine;
- Fig. 5:: ein fünftes Ausführungsbeispiel einer erfindungsgemäßen, angetriebenen Baugruppe einer Druckmaschine; und
- Fig. 6:: ein sechstes Ausführungsbeispiel einer erfindungsgemäßen, angetriebenen Baugruppe einer Druckmaschine.

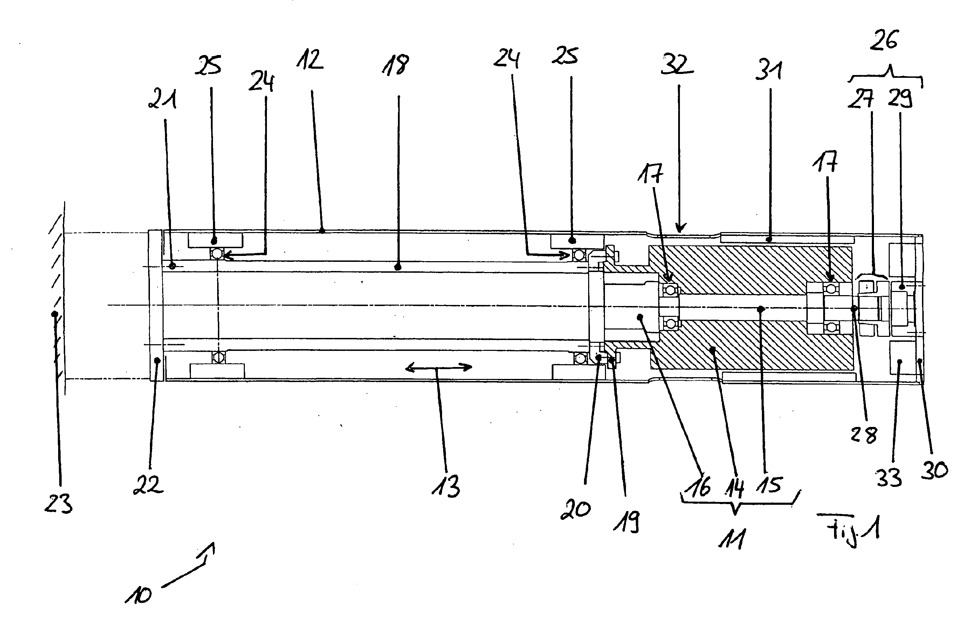

Nachfolgend wird die hier vorliegende Erfindung unter Bezugnahme auf Fig. 1 bis 6 in größerem Detail beschrieben, wobei Fig. 1 bis 6 unterschiedliche Ausführungsbeispiele einer erfindungsgemäßen, rotatorisch angetriebenen Baugruppe einer Druckmaschine zeigen.

Bei den in Fig. 1 bis 6 dargestellten, rotatorisch angetriebenen Baugruppen handelt es sich um Zugwalzen. Die Erfindung ist jedoch nicht auf Zugwalzen beschränkt, vielmehr kann die Erfindung auch bei rotatorisch angetriebenen Zylindern zum Einsatz kommen.

Fig. 1 zeigt ein erstes Ausführungsbeispiel einer als Zugwalze 10 ausgebildeten, rotatorisch angetriebenen Baugruppe einer Druckmaschine, wobei die Zugwalze 10 einen von einem Antrieb 11 rotatorisch angetriebenen, als Walzenmantel ausgebildeten Grundkörper 12 umfasst. Der vom Antrieb 11 angetriebene Walzenmantel 12 definiert einen Hohlraum 13, wobei im Sinne der hier vorliegenden Erfindung der Antrieb 11, der als Innenläufermotor ausgebildet ist, in die Zugwalze 10 integriert ist, nämlich derart, dass der Innenläufermotor 11 in dem vom Walzenmantel 12 definierten Hohlraum 13 angeordnet ist. Der als Innenläufermotor ausgebildete Antrieb 11 umfasst ein ständerseitiges Gehäuse 14 mit Wicklungen, einen läuferseitigen Rotor 15 mit Magneten sowie einen Drehgeber 16. Der läuferseitige Rotor 15 des Innenläufermotors 11 ist gegenüber dem ständerseitigen Gehäuse 14 desselben über vorzugsweise zwei Lager 17 drehbar gelagert.

Gemäß Fig. 1 ragt in den vom rotatorisch angetriebenen Walzenmantel 12 definierten Hohlraum 13 ein statorseitiges Distanzrohr 18 hinein, wobei der Innenläufermotor 11, nämlich dessen ständerseitige Baugruppen, über einen drehgeberseitigen Flansch 19 an einen Flansch 20 des Distanzrohrs 18 angreifen. Ständerseitige Baugruppen des Innenläufermotors 11 sind demnach drehgeberseitig an einer sogenannten B-Lagerseite des Innenläufermotors 11 mit dem statorseitigen Distanzrohr 18 gekoppelt.

An einem dem Flansch 20 und damit dem Innenläufermotor 11 gegenüberliegenden Ende 21 ist im gezeigten Ausführungsbeispiel das Distanzrohr 18 an einem Schlitten 22 einer Linearverstelleinheit befestigt, wobei der Schlitten 22 der Linearverstelleinheit an einer Wand 23 eines Maschinengestells gelagert ist. Bei der Zugwalze 10 handelt es sich demnach um eine einseitig an dem Schlitten 22 der Linearverstelleinheit gelagerten, drehend angetriebenen Baugruppe.

Der vom Innenläufermotor 11 drehend angetriebene Walzenmantel 12 der Zugwalze 10 ist über zwei Lager 24 auf dem statorseitigen Distanzrohr 18 drehbar gelagert, wobei die Lager 24 zwischen dem Distanzrohr 18 und sogenannten Walzenböden 25 des Walzenmantels 12 positioniert sind. Der sich zwischen den beiden Lagerstellen 24 erstreckende Abschnitt des Walzenmantels 12 ist beim Transport des Bedruckstoffs vom Bedruckstoff überdeckt. Der Innenläufermotor 11 ist demnach im Ausführungsbeispiel der Fig. 1 derart in den vom Walzenmantel 12 definierten Hohlraum 13 integriert, dass derselbe außerhalb des beim Bedruckstofftransport vom Bedruckstoff überdeckten Abschnitt des Walzenmantels 12 liegt.

Der Innenläufermotor 11 treibt über eine Kupplung 26 in den Walzenmantel 12 der Zugwalze 10 ein, wobei eine erste Kupplungshälfte 27 an einem Rotorstummel 28 des läuferseitigen Rotors 15 des Innenläufermotors 11 und eine zweite Kupplungshälfte 29 an einer Abdeckscheibe 30 angreift. Die Abdeckscheibe 30 ist mit dem Walzenmantel 12 drehfest verbunden, so dass der Innenläufermotor 11 demnach ausgehend von dem läuferseitigen Rotor 15 über die Kupplung 26 in die Abdeckscheibe 30 und über die Abdeckscheibe 30 in den Walzenmantel 12 eintreibt.

Um beim Betrieb des Innenläufermotors 11 durch denselben in die Zugwalze 10 eingebrachte Wärme abzuführen, verfügt die Zugwalze 10 über mindestens eine Belüftungseinrichtung zur Belüftung des Innenläufermotors 11 und damit zur Abführung der vom Innenläufermotor 11 erzeugten Wärme.

Im Ausführungsbeispiel der Fig. 1 wird eine erste Belüftungseinrichtung von schaufelartigen Vorsprüngen 31 gebildet, die an einer Innenseite des Walzenmantels 12 ausgebildet sind und in einen radialen Zwischenraum zwischen dem Walzenmantel 12 und dem ständerseitigen Gehäuse 14 des Innenläufermotors ragen. Diese Vorsprünge 31 rotieren zusammen mit dem Walzenmantel 12 und bewirken eine Umströmung des Innenläufermotors 11 mit Kühlluft, wobei die Kühlluft über der Abdeckscheibe 30 zugeordnete, nicht-dargestellte Öffnungen in den Hohlraum 13 eintritt und über den Walzenmantel 12 zugeordnete Öffnungen 32 aus dem Hohlraum austritt. Die Öffnungen 32 liegen dabei außerhalb des beim Bedruckstofftransport vom Bedruckstoff überdeckten Abschnitt des Walzenmantels 12.

Um den Eintritt der Kühlluft in den Hohlraum über die nicht-dargestellten, der Abdeckscheibe 30 zugeordneten Öffnungen zu unterstützen, verfügt die Zugwalze 10 über eine zweite Belüftungseinrichtung, die von der Abdeckscheibe 30 zugeordneten, schaufelartigen Vorsprüngen 33 gebildet ist. Die schaufelartigen Vorsprünge 33 rotieren zusammen mit der Abdeckscheibe 30 und ragen in einen axialen Zwischenraum zwischen dem Abdeckkörper 30 und dem Innenläufermotor 11 hinein.

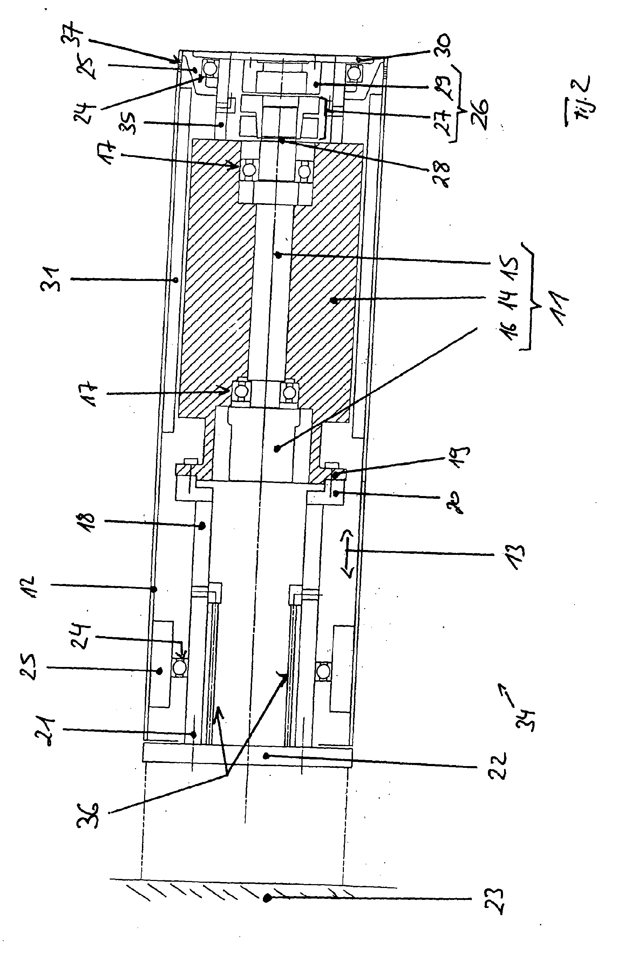

Fig. 2 zeigt ein zweites Ausführungsbeispiel einer als Zugwalze 24 ausgebildeten, rotierend angetriebenen Baugruppe einer Druckmaschine, wobei nachfolgend zur Vermeidung unnötiger Wiederholungen nur auf die Details eingegangen wird, durch die sich das Ausführungsbeispiel der Fig. 2 vom Ausführungsbeispiel der Fig. 1 unterscheidet. Für gleiche Baugruppen werden gleiche Bezugsziffern verwendet.

Im Ausführungsbeispiel der Fig. 2 ist der rotierend angetriebene Walzenkörper 12 wiederum über zwei Lager 24 gelagert, wobei jedoch im unterschiedlichen Ausführungsbeispiel der Fig. 1 nicht beide Lager zu einer Seite des Innenläufermotors 11 positioniert sind, vielmehr ist im Ausführungsbeispiel der Fig. 2 zu beiden Seiten des Innenläufermotors 11 jeweils ein Lager 24 angeordnet.

Ein erstes Lager 24 ist zwischen dem statorseitigen Distanzrohr 18 und dem Walzenboden 25 des Walzenmantels 12 angeordnet. Ein zweites Lager 24 ist zwischen einem weiteren Walzenboden 25 des Walzenmantels 12 und einem statorseitigen Distanzring 35 angeordnet, wobei sich der Distanzring 25 zwischen der Abdeckscheibe 30 und dem Innenläufermotor 11 erstreckt.

Im Ausführungsbeispiel der Fig. 2 ist der Innenläufermotor 11 demnach zwischen den beiden Lagerstellen 24 des Walzenmantels 12 positioniert und demnach derart in den vom Walzenmantel 12 definierten Hohlraum 13 integriert, dass der Innenläufermotor 11 innerhalb eines beim Bedruckstofftransport vom Bedruckstoff überdeckten Abschnitts des Walzenmantels 12 liegt.

Im Ausführungsbeispiel der Fig. 2 verfügt die Zugwalze 34 über lediglich eine Belüftungseinrichtung, die von den schaufelartigen Vorsprüngen 31 gebildet ist, die der Innenfläche des rotorseitigen Walzenmantels 12 zugeordnet sind. Kühlluft zur Abführung der vom Innenläufermotor 11 erzeugten Wärme wird über eine Luftzuführung 36 in den Hohlraum 13 der Zugwalze 34 eingeleitet, wobei dieselbe nach Passieren des Innenläufermotors 11 die Zugwalze 34 über Öffnungen 37 verlässt, die benachbart zur Abdeckscheibe 30 in den Walzenmantel 12 eingebracht sind. Die Kühlluft kann beispielsweise durch einen außerhalb der Zugwalze angeordneten Lüfter erzeugt werden.

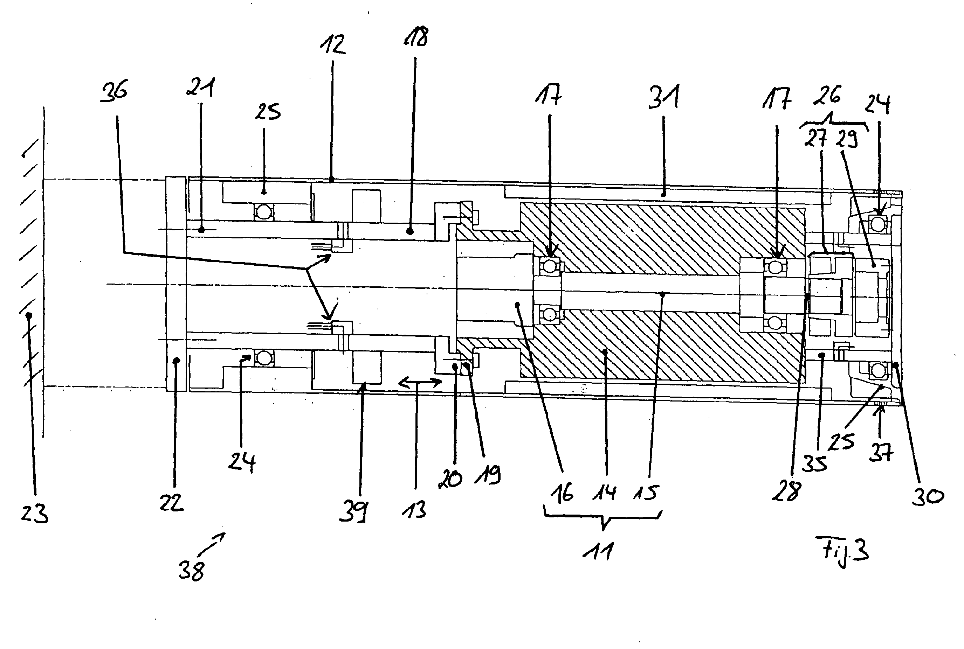

Ein weiteres Ausführungsbeispiel einer erfindungsgemäßen, als Zugwalze 38 ausgebildeten, rotierend angetriebenen Baugruppe einer Druckmaschine zeigt Fig. 3, wobei sich Fig. 3 vom Ausführungsbeispiel der Fig. 2 lediglich dadurch unterscheidet, dass im Ausführungsbeispiel der Fig. 3 zusätzlich zu der von den schaufelartigen Vorsprüngen 31 bereitgestellten Belüftungseinrichtung eine weitere Belüftungseinrichtung vorgesehen ist, um die vom Innenläufermotor 11 erzeugte Wärme abzuführen. Bei dieser weiteren Belüftungseinrichtung handelt es sich um ein Lüfterrad 39, das auf dem statorseitigen Distanzrohr 18 drehbar gelagert ist und mit Hilfe eines Außenläufermotors oder mit Hilfe von Druckluft angetrieben werden kann. Mit dieser weiteren Belüftungseinrichtung kann die Luftströmung im Hohlraum 13 der Zugwalze 38 vergrößert werden.

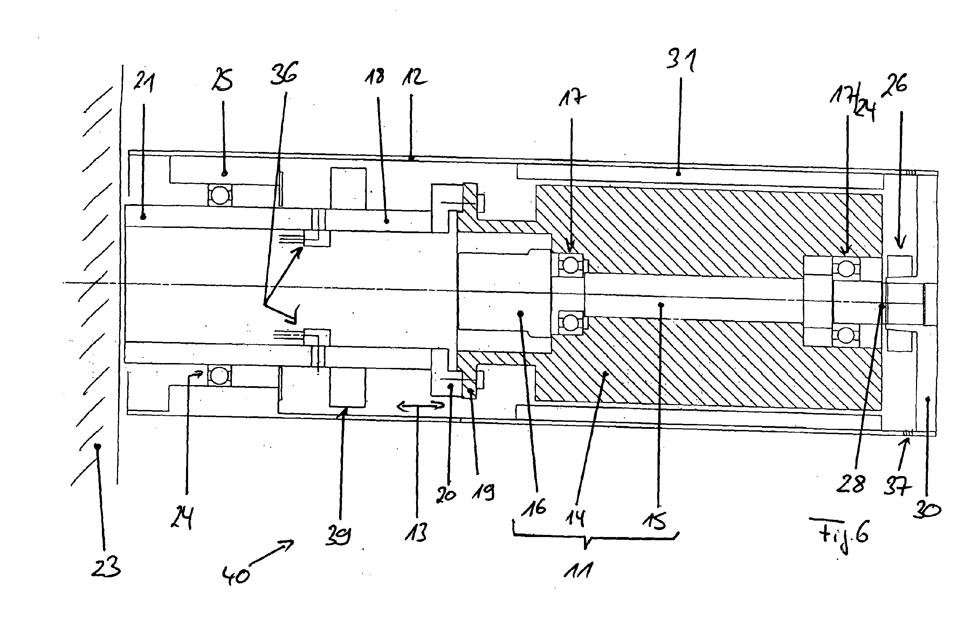

Ein weiteres Ausführungsbeispiel einer erfindungsgemäßen, als Zugwalze 40 ausgebildeten, rotierend angetriebenen Baugruppe einer Druckmaschine zeigt Fig. 6, wobei sich das Ausführungsbeispiel der Fig. 6 vom Ausführungsbeispiel der Fig. 3 dadurch unterscheidet, dass im Ausführungsbeispiel der Fig. 6 die einseitig gelagerte Zugwalze 40 nicht an einem Schlitten einer Linearverstelleinheit angreift, sondern vielmehr unmittelbar an der Wand 23 des Maschinengestells.

Ein weiterer Unterschied des Ausführungsbeispiels der Fig. 6 zum Ausführungsbeispiel der Fig. 3 besteht darin, dass im Ausführungsbeispiel der Fig. 6 lediglich zu einer Seite des Innenläufermotors 11 ein einziges Lager 24 zur drehbaren Lagerung des Walzenmantels 12 am dem statorseitigen Distanzrohr 18 vorgesehen ist, wobei eine zweite Lagerstelle 24 für den Walzenmantel 12 von einem entsprechend dimensionierten Lager 17 des Innenläufermotors 11 bereitgestellt wird. Im Ausführungsbeispiel der Fig. 6 kann demnach gegenüber dem Ausführungsbeispiel der Fig. 3 eine Lagerstelle eliminiert werden.

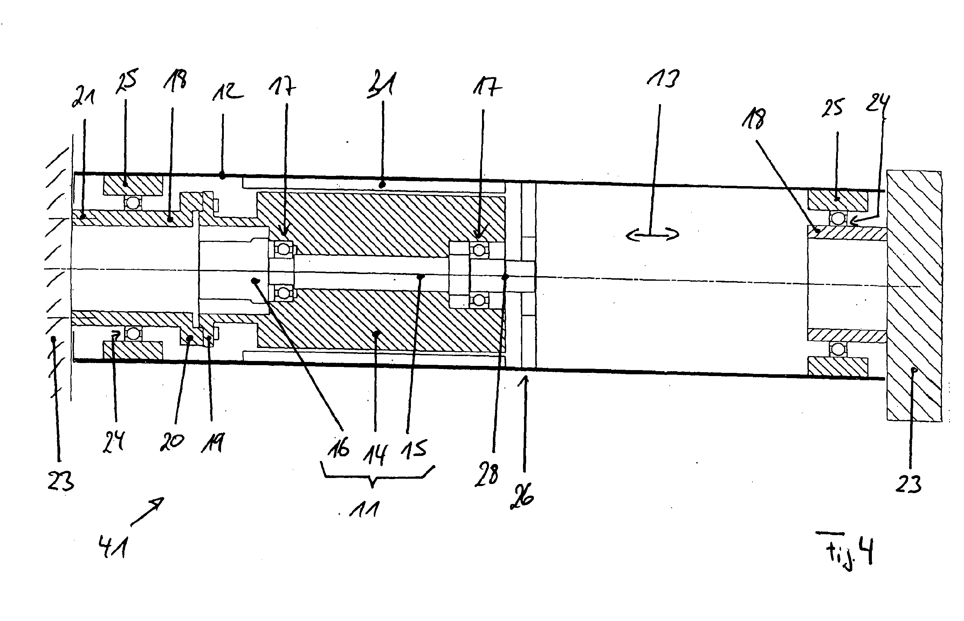

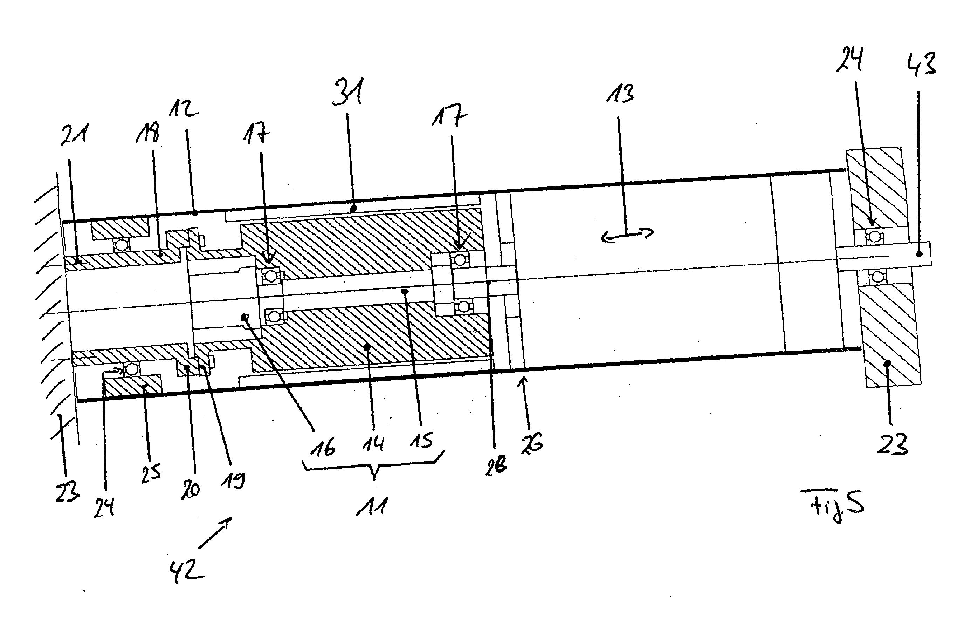

Fig. 1, 2, 3 und 6 zeigen allesamt Ausführungsbeispiele einer Zugwalze, die einseitig gelagert ist. Demgegenüber zeigen Fig. 4 und 5 Ausführungsbeispiele von beidseitig gelagerten, als Zugwalzen ausgebildeten Baugruppen einer Druckmaschine.

So zeigt Fig. 4 eine Zugwalze 41, die beidseitig an Wänden 23 eines Maschinengestells drehbar gelagert ist. Zu beiden Seiten des Walzenmantels 12 erstrecken sich in den vom Walzenmantel 12 definierten Hohlraum 13 Distanzrohre 18 hinein, wobei an einem der Distanzrohre 18 die ständerseitigen Baugruppen des Innenläufermotors 11 drehgeberseitig befestigt sind. Zu beiden Seiten des Innenläufermotors 11 ist jeweils ein Lager 24 zur Lagerung des Walzenmantels 12 an den Distanzrohren 18 positioniert. Der Innenläufermotor 11 ist in den Hohlraum 13 derart integriert, dass derselbe innerhalb eines dem Papierbahntransport dienenden Abschnitts des Walzenmantels 12 liegt.

Ein weiteres Ausführungsbeispiel einer als Zugwalze 42 ausgebildeten, erfindungsgemäßen Baugruppe einer Druckmaschine zeigt Fig. 5, wobei sich das Ausführungsbeispiel der Fig. 5 vom Ausführungsbeispiel der Fig. 4 lediglich dadurch unterscheidet, dass eine Lagerstelle 24 zur Lagerung des Walzenmantels 12 in dem Bereich einer Seitenwand 23 des Maschinengestells verlagert ist. Demnach entfällt im Ausführungsbeispiel der Fig. 5 ein Distanzrohr 18. Über eine durch die Seitenwand 23 geführte Achse und einen an diese Achse 43 angreifenden Zahnriemen bzw. ein an dieser Achse 43 angreifendes Getriebezahnrad können weitere Zugwalzen von der Zugwalze 42 aus indirekt angetrieben werden.

Sämtlichen Ausführungsbeispielen der Fig. 1 bis 6 ist gemeinsam, dass ein als Innenläufermotor 11 ausgebildeter Antrieb in eine vorzugsweise als Zugwalze ausgebildeten Baugruppe einer Druckmaschine integriert ist, nämlich in einen von einem Walzenmantel 12 definierten Hohlraum 13. Ständerseitige Elemente des Innenläufermotors 11 sind drehgeberseitig, nämlich an einer sogenannten B-Lagerseite, mit einem statorseitigen Distanzrohr 18 gekoppelt, welches in den Innenraum 13 hineinragt, wobei das statorseitige Distanzrohr 18 der Lagerung der Zugwalze an einem Schlitten einer Linearverstelleinheit oder an einer Wand eines Maschinengestells dient. Über mindestens eine Belüftungseinrichtung ist Wärme, die der Innenläufermotor 11 abgibt, aus der angetriebenen Zugwalze abführbar.

### Bezugszeichenliste

- 10: Baugruppe/Zugwalze
- 11: Antrieb
- 12: G rundkörper/Walzenmantel
- 13: Hohlraum
- 14: ständerseitiges Gehäuse
- 15: läuferseitiger Rotor
- 16: Drehgeber
- 17: Lager
- 18: Distanzrohr
- 19: Flansch
- 20: Flansch
- 21: Ende
- 22: Schlitten
- 23: Wand
- 24: Lager
- 25: Walzenboden
- 26: Kupplung
- 27: erste Kupplungshälfte
- 28: Rotorstummel
- 29: zweite Kupplungshälfte
- 30: Abdeckscheibe
- 31: Vorsprung
- 32: Öffnung
- 33: Vorsprung / Lüfterrad
- 34: Baugruppe/Zugwalze
- 35: Distanzring
- 36: Luftzuführung
- 37: Öffnung
- 38: Baugruppe/Zugwalze
- 39: Lüfterrad
- 40: Baugruppe/Zugwalze
- 41: Baugruppe/Zugwalze
- 42: Baugruppe/Zugwalze
- 43: Achse

## Patentansprüche

1. Angetriebene Baugruppe einer Druckmaschine, nämlich einem Bedruckstofftransport dienende Walze oder einem Bedruckstofftransport dienender Zylinder, mit einem als Elektromotor ausgebildeten Antrieb zum rotierenden Antreiben rotorseitiger Elemente der Baugruppe, **dadurch gekennzeichnet, dass** der Elektromotor (11) in die angetriebene Baugruppe integriert ist, wobei der Elektromotor (11) als Innenläufermotor ausgebildet ist.

2. Baugruppe nach Anspruch 1, **dadurch gekennzeichnet, dass** der Innenläufermotor (11) ständerseitige Wicklungen und läuferseitige Magneten aufweist.

3. Baugruppe nach Anspruch 1 oder 2, **dadurch gekennzeichnet, dass** die angetriebene Baugruppe einen rotorseitigen Grundkörper (12), nämlich einen Walzenmantel oder einen Zylindermantel, aufweist, wobei der Innenläufermotor (11) in einen vom Grundkörper (12) definierten Hohlraum (13) integriert ist.

4. Baugruppe nach Anspruch 3, **dadurch gekennzeichnet, dass** in den rotorseitigen Grundkörper (12) mindestens ein statorseitiges Distanzrohr (18) hineinragt, wobei ständerseitige Elemente des Innenläufermotors (11) drehgeberseitig an einem statorseitigen Distanzrohr (18) befestigt sind.

5. Baugruppe nach Anspruch 4, **dadurch gekennzeichnet, dass** ein drehgeberseitiger Flansch (19) des Innenläufermotors (11) an einem Flansch (20) des Distanzrohrs (18) angreift.

6. Baugruppe nach einem oder mehreren der Ansprüche 1 bis 5, **gekennzeichnet durch** mindestens eine in die angetriebene Baugruppe integrierte Belüftungseinrichtung zur Belüftung des Innenläufermotors (11) und damit zur Abführung der von dem Innenläufermotor erzeugten Wärme.

7. Baugruppe nach Anspruch 6, **dadurch gekennzeichnet, dass** eine erste Belüftungseinrichtung von schaufelartigen Vorsprüngen (31) gebildet ist, die an einer Innenfläche des rotorseitigen Grundkörpers (12) ausgebildet sind und in einen radialen Zwischenraum zwischen dem Grundkörper (12) und dem Innenläufermotor (11) ragen.

8. Baugruppe nach Anspruch 6 oder 7, **dadurch gekennzeichnet, dass** eine zweite Belüftungseinrichtung von schaufelartigen Vorsprüngen (33) gebildet ist, die an einer Innenfläche eines rotierenden Abdeckkörpers (30) ausgebildet sind und in einen axialen Zwischenraum zwischen dem Abdeckkörper (30) und dem Innenläufermotor (11) ragen.

9. Baugruppe nach einem oder mehreren der Ansprüche 6 bis 8, **dadurch gekennzeichnet, dass** eine dritte Belüftungseinrichtung von einem Lüfterrad (39) gebildet ist, das an dem statorseitigen Distanzrohr (18) drehbar gelagert ist.

10. Baugruppe nach einem oder mehreren der Ansprüche 4 bis 9, **dadurch gekennzeichnet, dass** dieselbe einseitig an einer Wand eines Maschinengestells gelagert ist, wobei hierzu das statorseitige Distanzrohr (18) an einem dem Innenläufermotor (11) gegenüberliegenden Ende an der Wand des Maschinengestells angreift.

11. Baugruppe nach einem oder mehreren der Ansprüche 4 bis 9, **dadurch gekennzeichnet, dass** dieselbe einseitig an einem Schlitten (22) einer Linearverstelleinheit gelagert ist, wobei hierzu das statorseitige Distanzrohr (18) an einem dem Innenläufermotor gegenüberliegenden Ende an dem Schlitten angreift, der seinerseits an einer Wand eines Maschinengestells gelagert ist.

12. Baugruppe nach einem oder mehreren der Ansprüche 4 bis 9, **dadurch gekennzeichnet, dass** dieselbe beidseitig an Wänden eines Maschinengestells gelagert ist.

13. Baugruppe nach einem oder mehreren der Ansprüche 4 bis 12, **dadurch gekennzeichnet, dass** der rotorseitige Grundkörper (12) an mindestens zwei Lagerstellen (24) drehbar gelagert, wobei eine erste Lagerstelle (24) zwischen dem rotorseitigen Grundkörper (12) und dem statorseitigen Distanzrohr (18) ausgebildet ist.

14. Baugruppe nach Anspruch 13, **dadurch gekennzeichnet, dass** eine zweite Lagerstelle (24) ebenfalls zwischen dem rotorseitigen Grundkörper (12) und dem statorseitigen Distanzrohr (18) ausgebildet ist, wobei die beiden Lagerstellen zu einer Seite des Innenläufermotors angeordnet sind.

15. Baugruppe nach Anspruch 13, **dadurch gekennzeichnet, dass** eine zweite Lagerstelle (24) zwischen dem rotorseitigen Grundkörper (11) und einem statorseitigen Distanzring (35) ausgebildet ist, wobei die beiden Lagerstellen zu unterschiedlichen Seiten des Innenläufermotors angeordnet sind.

16. Baugruppe nach Anspruch 13, **dadurch gekennzeichnet, dass** eine zweite Lagerstelle (24) von einer entsprechend dimensionierten Lagerstelle (17) des Innenläufermotors gebildet ist.

17. Baugruppe nach Anspruch 13, **dadurch gekennzeichnet, dass** eine zweite Lagerstelle (24) in eine Wand des Maschinengestells integriert ist.

18. Baugruppe nach einem oder mehreren der Ansprüche 3 bis 17, **dadurch gekennzeichnet, dass** der Innenläufermotor (11) derart in dem vom rotorseitigen Grundkörper (12) definierten Hohlraum (13) integriert ist, dass der Innenläufermotor (11) innerhalb eines beim Bedruckstofftransport vom Bedruckstoff überdeckten Abschnitts des Grundkörpers (12) liegt.

19. Baugruppe nach einem oder mehreren der Ansprüche 3 bis 17, **dadurch gekennzeichnet, dass** der Innenläufermotor (11) derart in dem vom rotorseitigen Grundkörper (12) definierten Hohlraum (13) integriert ist, dass der Innenläufermotor (11) außerhalb eines beim Bedruckstofftransport vom Bedruckstoff überdeckten Abschnitts des Grundkörpers (12) liegt.
